# EUROPÄISCHE PATENTSCHRIFT

(11) **EP 3 491 685 B1**
(45) Veröffentlichungstag und Bekanntmachung des Hinweises auf die Patenterteilung: **08.07.2020**
(21) Anmeldenummer: 17723369.9
(22) Anmeldetag: 12.05.2017
(51) Int. Cl.: H01M 2/10, B62K 19/30, B62M 6/90, B62H 5/00, B62J 43/13, B62J 43/23, B62J 43/28, F16B 7/22

(54) **HALTEELEMENT ZUR VERWENDUNG AN EINEM AKKUMULATOR SOWIE ZUGEHÖRIGE HALTEVORRICHTUNG**
RETAINING ELEMENT FOR USE ON AN ACCUMULATOR, AND CORRESPONDING RETAINING DEVICE
ÉLÉMENT DE RETENUE À EMPLOYER SUR UN ACCUMULATEUR ET DISPOSITIF DE RETENUE CORRESPONDANT

(30) Priorität: 28.07.2016 DE 102016213903
(43) Veröffentlichungstag der Anmeldung: 05.06.2019
(73) Patentinhaber: Robert Bosch GmbH, 70442 Stuttgart (DE)
(72) Erfinder: HUMMEL, Frank, 72829 Engstingen (DE); JABS, Volker, 72144 Dusslingen (DE); TENZER, Martin, 72622 Nuertingen (DE); SCHUMACHER, Christoph, 72144 Dusslingen (DE); TRIF, Christian, 71116 Gaertringen (DE)
(86) Internationale Anmeldenummer: PCT/EP2017/061464
(87) Internationale Veröffentlichungsnummer: WO 2018/019441

(56) Entgegenhaltungen:
- EP-A1- 2 230 164
- DE-U1-202015 003 010
- JP-A- H0 958 563
- US-A1- 2013 241 169

## Beschreibung

Die Erfindung betrifft ein Halteelement zur Befestigung an einem Akkumulator, mit dem eine Entnahmesicherung aus einer Haltevorrichtung erreicht werden soll, die auf dieses Halteelement abgestimmte Haltevorrichtung, ein aus dem Halteelement und der Haltevorrichtung bestehende Halteeinrichtung sowie ein Fahrradrahmen, in dessen Inneren zumindest die Haltevorrichtung angeordnet ist.

### Stand der Technik

Bei der Nutzung von elektrisch betriebenen Fahrrädern besteht die Notwendigkeit, den zugehörigen Energiespeicher, z.B. einen Akkumulator am Fahrrad unterzubringen, möglichst ohne die Beweglichkeit des Fahrers einzuschränken. Üblicherweise wird der Energiespeicher am Fahrradrahmen, bestehend aus Unterrohr und Sattelrohr ggf. auch Oberrohr befestigt. Dabei besteht gerade beim Sattelrohr die Möglichkeit, den Energiespeicher im Rahmendreieck oder zwischen Sattelrohr und Hinterrad, z.B. im hinteren Rahmendreieck anzubringen. In letzterem Fall vergrößert sich dabei u. U. der Abstand zwischen Tretkurbel und Hinterradachse, um genügend Platz für den meist voluminösen Energiespeicher zu schaffen. Eine weitere Möglichkeit der Unterbringung des Energiespeichers besteht darin, diesen am Gepäckträger zu befestigen.

Aus der Schrift EP 2 134 592 B1 ist die Befestigung einer Batterie am Unterrohr bekannt. Hierbei ist das Unterrohr aus Stabilitätsgründen als belastungstragendes, mehrräumiges Rohr mit einer Ausschneidung zum Empfang der Batterie ausgestaltet. Dabei ist vorgesehen, dass sich die seitlich offene Ausschneidung in wenigstens einem Raum im mehrräumigen Rohr erstreckt und wenigstens ein weiterer Raum im Wesentlichen intakt ist.

Weiterhin ist aus der EP 1 982 909 B1 eine Kombination aus Batterie und Fahrradrahmen bekannt, bei dem in einem der Rohre des Fahrradrahmens eine bzgl. der Seitenwand tiefgeschnittene Oberkante zur Erzeugung einer zum Teil seitlich offenen Aussparung vorgesehen ist, in die ein Rastrahmen eingesetzt werden kann. Dieser Rastrahmen wird vollständig in die Aussparung eingeführt, so dass er die nachträglich eingeführte Batterie vollständig umschließen kann.

Aus der Schrift DE 20 2013 008187 A1 ist ein in den Fahrradrahmen integrierbarer Akkumulator bekannt. Die Halterung bzw. Kontaktierung erfolgt dabei über eine im Rahmen separat angeordnete Schnittstelle. Die Arretierung erfolgt über eine Unterschneidung des länglichen Akkumulators an einer der Kontaktierung gegenüberliegenden kurzen Seite, so dass der Akkumulator teilweise in den Rahmen eingeschoben werden kann.

In den Schriften DE 20 2014 009832 U1 und EP2230164 ist jeweils ein Haltelement bekannt, welches zur Aufnahme, Halterung bzw. Arretierung eines Akkumulators vorgesehen ist. Darüber hinaus wird ein Rohrelement beschrieben, welches das Haltelement beinhaltet.

### Offenbarung der Erfindung

Mit der vorliegenden Erfindung wird ein Halteelement beansprucht, welches zur Befestigung an einem Akkumulator vorgesehen ist oder Teil eines Akkumulators ist und die Entnahme aus einer Haltevorrichtung absichern soll.

Darüber hinaus wird auch die auf das Halteelement ausgerichtete Haltevorrichtung sowie einer Halteeinrichtung bestehend aus dem Halteelement und der Haltevorrichtung beansprucht. Da die Verwendung einer derartigen Haltevorrichtung für ein insbesondere elektrisch angetriebenes Fahrrad vorgesehen ist, wird zusätzlich auch ein Fahrradrahmen beansprucht, bei dem in einem der hierzu verwendeten Rohre im Inneren diese Haltevorrichtung befestigt ist.

Das erfindungsgemäße Halteelement weist zur Befestigung an einem (Fahrrad-)Akkumulator eine erste Seite mit einem Befestigungsmittel auf. Dieses Befestigungsmittel kann dabei als Steckmittel und/oder Schraubmittel ausgestaltet sein. Auf der zweiten Seite, die der ersten Seite gegenüber liegt, weist das Halteelement eine Sperrelement sowie einen ersten Anschlag auf, in die ein externer Riegel eingreifen kann. Dieser externe Riegel ist dabei Teil einer Haltevorrichtung, die auf die Aufnahme des Halteelements eingerichtet ist. Das Sperrelement des Halteelements weist dabei einen Haken und/oder ein Sperrriegel auf, welcher von der zweiten Seite wegführt und zum Angriff an einen zweiten Anschlag dient, der in der Haltevorrichtung vorgesehen ist. Darüber hinaus weist das Sperrelement eine federnde Wirkung auf, die senkrecht zur zweiten Seite ausgerichtet ist, d.h. in einer horizontalen Richtung.

Mit der Ausgestaltung eines derartigen Halteelements bzw. eines Akkumulators, der ein derartiges Halteelement aufweist, kann eine Befestigung des Halteelements bzw. des Akkumulators in einer Haltevorrichtung erreicht werden, bei dem zwei unabhängig voneinander angeordnete Anschläge bzw. Angriffsmittel eine Herausnahme aus der Haltevorrichtung verhindern.

Das Sperrelement ist am Halteelement bevorzugt im Randbereich der zweiten Seite angebracht und als Blattfeder in Richtung der Mitte der zweiten Seite ausgebildet. Alternativ kann das Sperrelement auch ein erstes Federelement aufweisen, durch dass das Sperrelement unter Spannung von der zweiten Seite beabstandet gehalten wird. Dabei kann das Sperrelement derart angeordnet sein, dass ein zur Erzeugung dieser Spannung vorgesehenes erstes Federelement im Randbereich der zweiten Seite des Halteelements angeordnet ist. Das Sperrelement kann dabei optional über wenigstens die Hälfte der zweiten Seite hinwegreichen und drehbar gelagert sein.

Zur flächigen Abdeckung wenigstens der einen Seite des Akkumulators kann das Halteelement an die Form der Seite des Akkumulators angepasst sein, an der es befestigt ist. Zur Befestigung kann dabei eine insbesondere mittig angeordnete Erhebung bzw. Vertiefung vorgesehen sein, die in eine entsprechende Öffnung an der Befestigungsseite des Akkumulators eingesteckt werden kann. Selbstverständlich können auch zwei oder mehrere Erhebungen und/oder Vertiefungen auf der Oberfläche des Halteelements verteilt vorgesehen sein. Alternativ oder zusätzlich kann auch vorgesehen sein, dass das Halteelement auf den Akkumulator aufgeschraubt werden kann. Hierzu ist ein oder mehrere Gewinde vorgesehen, welches wenigstens teilweise umläuft. Dabei kann selbstverständlich auch vorgesehen sein, dass das Gewinde auf der Erhebung und/oder in der Vertiefung vorgesehen ist.

Die Haltevorrichtung, die erfindungsgemäß baulich auf das Halteelement und/oder ein mit dem Halteelement versehenen Akkumulator ausgerichtet ist, weist einen verschiebbaren Riegel auf, der sowohl in eine verriegelte als auch eine entriegelte Position gebracht werden kann. Hierzu weist der Riegel wenigstens ein Riegelteilelement auf, welches eine horizontale Bewegungskomponente zur zweiten Seite des Halteelements aufweist. In der verriegelten Position des Riegels wird dabei das Riegelteilelement derart verschoben, dass es an den ersten Anschlag des in die Haltevorrichtung eingesetzten Halteelements angreift. Hierbei kann das Riegelteilelement einen mechanischen Kontakt mit dem ersten Anschlag erzeugen, der eine Kraft in vertikaler Richtung nach unten erzeugt und so das Halteelement und/oder den mit dem Halteelement verbundenen Akkumulator nach unten drückt. Wesentlich ist jedoch, dass der Angriff des Riegelteilelements an dem ersten Anschlag verhindert, dass das Halteelement und/oder der mit dem Halteelement verbundenen Akkumulator nach oben bewegt werden kann, so dass eine Verriegelungssituation zumindest in vertikaler Richtung entsteht. In der entriegelten Position des Riegels wird dagegen die Bewegung des Halteelements bzw. des damit verbundenen Akkumulators in vertikaler Richtung, d.h. nach oben zumindest teilweise freigegeben. Weiterhin weist die Haltevorrichtung einen zweiten Anschlag auf, an dem das Sperrelement des Halteelements in vertikaler Richtung anschlagen kann, zumindest falls das Sperrelement nicht entgegen seiner Federwirkung zurückgedrückt worden ist. Bevorzugt ist dieser zweite Anschlag der Haltevorrichtung in vertikaler Richtung beabstandet von dem Sperrelement des Halteelements vorgesehen, welches in der Haltevorrichtung eingebracht ist.

Mit der Ausgestaltung dieser Haltevorrichtung wird daher eine zweistufige Halterung des Halteelements bzw. des damit verbundenen Akkumulators erreicht, indem ein zweiter Anschlag die Herausnahme nach der Entriegelung verhindert.

In einer Weiterbildung der Erfindung ist vorgesehen, dass der Riegel der Haltevorrichtung das Halteelement und/oder den mit dem Halteelement verbundenen Akkumulator zumindest im Bereich der Haltevorrichtung in vertikaler Richtung anhebt. Dies kann beispielsweise dadurch erfolgen, dass der Riegel beim Entriegeln derart mit dem Halteelement verbunden ist, dass es das Halteelement nach oben drückt. Alternativ kann vorgesehen sein, dass die Haltevorrichtung ein zweites Federelement aufweist, welches durch den Einsatz des Halteelements und/oder eines mit dem Halteelement verbundenen Akkumulators in der verriegelten Position zusammen gedrückt wird. Beim Entriegeln des Riegels erzeugt dieses gespannte zweite Federelement dann eine Bewegung des Halteelements bzw. des damit verbundenen Akkumulators nach oben, d.h. in vertikaler Richtung. Um zumindest ein Ende des Akkumulators anzuheben, kann vorgesehen sein, dass das zweite Federelement im unteren Bereich der Haltevorrichtung angeordnet ist. Selbstverständlich kann auch vorgesehen sein, dass das Federelement elektrisch ansteuerbar ist, so dass eine Spannung und Entspannung gesteuert werden kann. Für den Fall, dass die Haltevorrichtung in einem Ober- oder Unterrohr verwendet wird, welches die Aufnahme für den Akkumulator nach unten zur Fahrbahn hin aufweist, kann auf das Federelement verzichtet werden, da hierbei die Schwerkraft die Bewegung bis zur zweiten Arretierungsposition bewirkt.

Die Anhebung des Halteelements bzw. des damit verbundenen Akkumulators an zumindest der der Haltevorrichtung zugewandten Seite des Akkumulators ermöglicht es, bei einer geeigneten Wahl des damit verbundenen Hubs in vertikaler Richtung, dass das Sperrelement wenigstens teilweise über den oberen Rand der Haltvorrichtung hinaus ragt. Für den Fall des Einsatzes und der Entnahme des Akkumulators in einem Ober- oder Unterrohr, kann der obere Rand der Haltevorrichtung bzw. des Oberrohrs auch nach unten, zur Fahrbahn hinweisen. Durch diesen Hub soll das Sperrelement von außen derart erreichbar sein, dass das Sperrelement zusammengedrückt werden kann. Durch das Zusammendrücken des Sperrelements entgegen seiner Federwirkung kann so der am Sperrelement vorhandene Haken vom zweiten Anschlag an der Haltevorrichtung entfernt werden, so dass eine Freigabe des Halteelements bzw. des damit verbundenen Akkumulators aus der Haltevorrichtung erfolgt. Eine Entnahme des Akkumulators ist somit möglich.

Eine Ausgestaltung der Erfindung betrifft die Erkennung eines Halteelements bzw. eines damit verbundenen Akkumulators in der Aufnahme der Haltevorrichtung. Hierzu ist ein elektrischer Kontakt vorgesehen, insbesondere im unteren Bereich der Haltevorrichtung, der eine mechanische Auflage durch das Halteelement bzw. den Akkumulator erfasst. Durch diesen elektrischen Kontakt kann somit erkannt werden, ob der Akkumulator in der Aufnahme der Haltervorrichtung korrekt sitzt, insbesondere in der verriegelten Position. Alternativ kann mit einem elektrischen Kontakt auch erfasst werden, ob sich der Riegel in der verriegelten Position befindet.

Der Riegel der Haltevorrichtung kann drehbar gelagert sein, so dass das Riegelteilelement von oben auf den ersten Anschlag des Haltelelements gedrückt werden kann. Weiterhin kann der Riegel Teil eines Schlosses sein.

Wie bereits ausgeführt, kann die Haltevorrichtung dazu vorgesehen sein, im Inneren eines Rohrs eines Fahrradrahmen angebracht zu sein. Hierzu ist es vorteilhaft, wenn die Haltevorrichtung entsprechende Befestigungen aufweist, mit denen ein Austausch möglich ist, um beispielsweise andere Akkumulatoren mit anderen Haltesysteme zu haltern. Besonders vorteilhaft ist das geschilderte zweistufige Halte- und Entnahmesystem für den Fall, dass der zugehörige Akkumulator von der Seite oder von unten in ein Rohr des Fahrradrahmens eingebracht werden soll. Hierdurch wird ein Herausfallen des Akkumulators bei der Entriegelung durch ein Schloss verhindert, indem der Akkumulator sich nur bis zum zweiten Anschlag bewegt und ein weiterer Entsperrvorgang notwendig ist.

Das Halteelement sowie die Haltevorrichtung können jeweils angeschrägt vorgesehen sein, so dass eine Führung beim Einsatz von oben erreicht werden kann.

Eine typische Anwendung der erfindungsgemäßen Vorrichtungen sind beispielhaft das Ober- und Unterrohr eines Fahrrads. Hierzu ist in dem jeweiligen Rohr durch ein Einschnitt in die Oberfläche des Rohrs eine Aufnahme vorgesehen, in dem der Akkumulator wenigstens teilweise untergebracht werden kann. Die Haltevorrichtung ist dabei an einem Ende im Inneren der Aufnahme angebracht.

Es sei deutlich darauf hingewiesen, dass sich die Bezeichnungen oben und unten in der vorstehenden Ausführung auf die Aufnahme bzw. Entnahme des Akkumulators bezüglich des Bodens des Rohres beziehen. Dementsprechend kann die Erfindung bei einem Ober- oder Unterrohr dazu genutzt werden, den Akkumulator aus der Aufnahme des Rohrs nach unten bezüglich der üblichen Verwendung eines Fahrradrahmens bezogen auf die Fahrbahn zu entnehmen.

Weitere Vorteile ergeben sich aus der nachfolgenden Beschreibung von Ausführungsbeispielen bzw. aus den abhängigen Patentansprüchen.

### Kurze Beschreibung der Zeichnungen

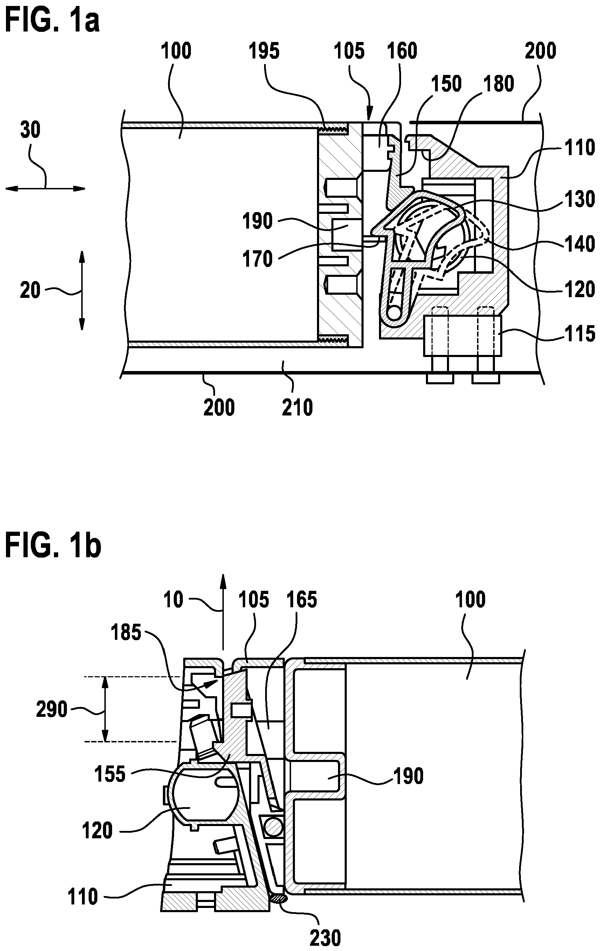

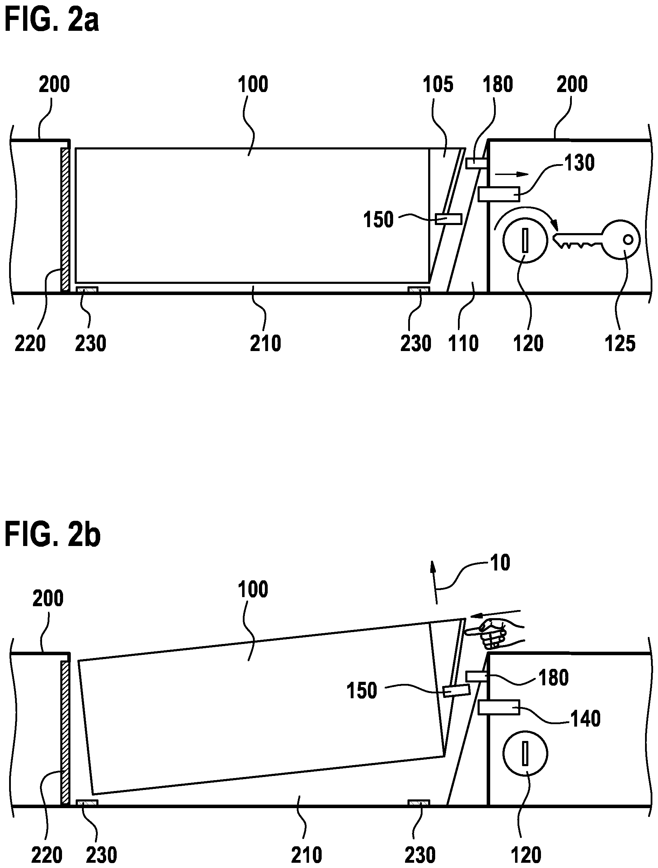

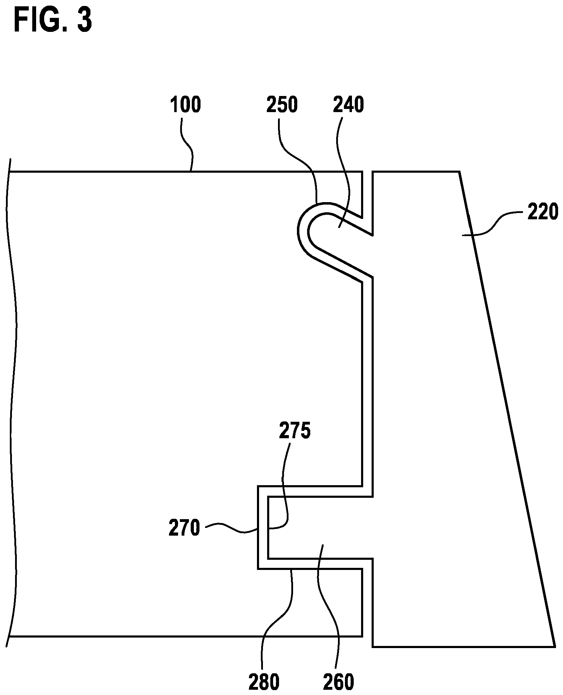

In den Figuren 1a und b sind mögliche Ausführungsbeispiele des ersten Halteelements der Erfindung dargestellt. Mit den Figuren 2a und b wird die Funktionsweise der Haltevorrichtung erläutert. Die Figur 3 zeigt eine mögliche Ausgestaltung des Kontaktierungsvorrichtung der Haltevorrichtung.

### Offenbarung der Erfindung

Beim Betrieb von elektrisch antreibbaren Zweirädern wie insbesondere Elektrofahrrädern ist die Unterbringung von Energiespeichern eine wichtige Notwendigkeit. So ist bekannt, Energiespeichern wie Akkumulatoren oder Batterien auf oder am Gepäckträger unterzubringen. Bei der größeren Anzahl von Elektrofahrrädern wird der Energiespeicher jedoch im Rahmendreieck oder hinter dem Sattelrohr angebracht. Eine derartige Anbringung reduziert jedoch den im Rahmendreieck für anderen Anwendung zur Verfügung stehenden Stauraum, wie z.B. einem Schloss, Trinkflaschenhalter und/oder Behälter für Flickwerkzeug. Daher gibt es Bestrebungen, die Energiespeicher direkt in den Rahmen zu integrieren, z.B. in das Unter- oder das Oberrohr.

Bei der Verwendung von in Fahrradrahmen integrierten Energiespeichern ist es notwendig, ein geeignetes Haltesystem, wie beispielhaft in der DE 20 2014 009732 U1 beschrieben, bereitzustellen. Mit dem vorliegenden Haltesystem wird eine zweistufige Freigabe des Energiespeichers beschrieben, bei dem die Entriegelung durch einen Schlüssel noch nicht die endgültige Entnahme des Energiespeichers aus dem Haltesystem bzw. dem Fahrradrahmen ermöglicht. Erst durch die Betätigung eines zweiten Sperrmechanismus" ist die Entfernung möglich. Diese zweistufige Entnahme ermöglicht es, dass der Energiespeicher nicht ungewollt aus der Aufnahme des Fahrradrahmens herausfallen kann, wenn bereits mittels des Abschließmechanismus' die Verriegelung entriegelt wurde. So kann beispielsweise die Unterbringung eines Akkumulators im Oberrohr von der Unterseite her realisiert werden, ohne dass die Gefahr besteht, dass bei einem Aufschließen des Schlosses der Akkumulator gleich herunter fällt.

In der Figur 1a ist ein erstes Ausführungsbeispiel für das erfindungsgemäße Halteelement 105 bzw. ein damit verbundener Akkumulator 100 sowie die zum Halteelement 105 zugehörige Haltevorrichtung 110 beschrieben. Das Halteelement 105 ist dabei mit wenigstens einem Befestigungsmittel 190 bzw. 195 ausgestattet an einer ersten Seite ausgestattet, mittels dem eine Befestigung an dem Akkumulator 100 ermöglicht wird. Hierbei kann es sich beispielsweise um wenigstens eine Erhebung 190 handeln, die in eine entsprechende Vertiefung auf einer (Längs-)Seite des Akkumulators 100 eingesteckt werden kann. Selbstverständlich kann auch wenigstens eine Vertiefung vorgesehen sein, die in eine entsprechende Erhebung eingesteckt werden kann. Alternativ oder zusätzlich kann auch ein Gewinde 195 vorgesehen sein, welches wenigstens teilweise umläuft, z.B. auch in der Vertiefung oder an der Erhebung.

Die Haltevorrichtung 110 weist einen Riegel 130 bzw. 140 auf, der wenigstens zwei unterschiedliche Positionen einnehmen kann. In der verriegelten Position 130 drückt ein an dem Riegel befindlicher Haken auf einen ersten Anschlag 170 des Halteelements 105, der auf einer zweiten Seite liegt, die gegenüber der ersten (Befestigungs-)Seite vorgesehen ist. Durch diese verriegelte Position 130 des Riegels wird die Bewegungsfreiheit des Halteelements 105 bzw. des damit verbundenen Akkumulators 100 in vertikaler Richtung 20 nach oben 10 eingeschränkt. Der Riegel 130 kann dabei derart ausgestaltet sein, dass er eine Drehbewegung ausübt, z.B. in Abhängigkeit der Betätigung eines mit dem Riegel 130 verbundenen Schlosses 120, durch den der Haken auf den ersten Anschlag 170 eine Kraft nach unten ausübt, um das Halteelement 105 bzw. den damit verbundenen Akkumulator 100 in einer dafür vorgesehene Halterung in einer ersten Arretierungsposition festhält. Wird der Riegel entriegelt, befindet er sich in der Position 140, so dass der Haken nicht mehr am ersten Anschlag 170 anliegt und so zumindest eine teilweise Bewegung des Halteelements 105 bzw. des damit verbundenen Akkumulators 100 nach oben 10 in vertikaler Richtung erlaubt. Im Zusammenwirken eines Haken eines Sperrelements 150, welches am Halteelement 105 angeordnet ist und von der zweiten Seite weg weist und eines zweiten Anschlags 180 an der Haltevorrichtung 110 wird diese vertikale Bewegung nach oben 10 jedoch begrenzt, insbesondere in einer zweiten Arretierungsposition. Das Ausmaß der Bewegung in vertikaler Richtung nach oben wird dabei durch den Abstand des Hakens des Sperrelements 150 und dem zweiten Anschlag 180 vorgegeben. Dieser durch die Anordnung vorgegebene Hub stellt ebenfalls ein Maß der Bewegung dar, mit der sich das Halteelement 105 bzw. der Akkumulator 100 über den oberen Rand der Haltevorrichtung bzw. eines (Rahmen-)Rohrs 200, in dem die sich die Haltevorrichtung befindet, erhebt. Das Sperrelement 150 ist dabei derart angeordnet, dass es sich bei der Anhebung des Halteelements 105 zumindest derart weit erhebt, dass es von außen zugänglich ist. Diese Zugänglichkeit wird im nachfolgenden dazu genutzt, dass eine Federung, mit der das Sperrelement 150 ausgestattet ist, zurückgedrückt werden kann, so dass der damit verbundene Haken nicht mehr an dem zweiten Anschlag 180 anliegt. Durch dieses Zurückdrücken des Sperrelements 150, insbesondere in horizontaler Richtung, kann so eine Herausnahme des Halteelements 150 bzw. des damit verbundenen Akkumulators 100 erreicht werden.

Die so erreichte zweistufige Entnahme eines mit dem erfindungsgemäße Halteelement 105 ausgestatteten Akkumulators 100 aus einer Haltevorrichtung 110 verhindert somit ein ungewolltes Herausfallen des Akkumulators 100 aus der Aufnahme 210 nach einer Entriegelung mittels eines Schlosses 120. Dies ist besonders vorteilhaft, wenn die erfindungsgemäße Anordnung über Kopf verwendet werden, z.B. in einem Ober- oder Unterrohr eines Fahrradrahmens mit Zugang von unten, bezogen auf die Fahrbahn.

Das Sperrelement 150 kann zur Realisierung der Federwirkung als Blattfeder ausgestaltet sein. Um bei einem Herausragen des Halteelements 105 über die Haltevorrichtung 110 bzw. die Oberfläche des Rahmenrohrs hinaus Zugriff auf diese Blattfeder zu erhalten, muss das Sperrelement 150 derart am Rand des Halteelements 105 angeordnet sein, dass ein äußerer Zugriff die Blattfeder zurückdrücken lässt.

Alternativ kann dem Sperrelement 150 ein Federelement 160 zugeordnet sein, welches am Rand des Halteelements 105 angeordnet ist und durch das Anheben des Halteelements 105 zum Zugriff freigegeben wird. Hierdurch kann das gesamte Sperrelement 150 in horizontaler Richtung 30 zusammengedrückt werden, so dass der mechanische Anschlag des entsprechenden Hakens am zweiten Anschlag 180 überwunden wird.

Zur Befestigung der Haltevorrichtung 110 im Inneren eines Rohrs 200 des Fahrradrahmens ist eine spezielle Befestigung 115 vorgesehen. Diese Befestigung kann lösbar oder nichtlösbar vorgesehen sein. Die lösbare Variante hat den Vorteil, dass eine für ein anderes Akkumulatorsystem vorgesehenes Halteelement verwendet werden kann, indem das entsprechend auf dieses andere Halteelement baulich ausgerichtete Haltevorrichtung ausgetauscht werden kann. Die Befestigung kann in beiden Fällen sowohl von außerhalb des Rohres 200 als auch von innerhalb erfolgen. Selbstverständlich ist auch eine Kombination beider Befestigungsarten vorgesehen.

Eine weitere Realisierungsmöglichkeit des Sperrelements 155 zeigt ein zweites Ausführungsbeispiel nach Figur 1b. Wie im ersten Ausführungsbeispiel ist ein Riegel vorgesehen, der mit einem Schloss 120 verbunden ist und wenigstens eine verriegelte und eine entriegelte Positionen einnehmen kann. Zur Verdeutlichung des Ausführungsbeispiels ist der Riegel jedoch in der Figur 1b nicht abgebildet. In diesem Ausführungsbeispiel ist das Sperrelement 155 drehbar ausgestaltet, indem der Drehpunkt in der unteren einen Hälfte und das Federelement 165 in der oberen anderen Hälfte des Halteelements 105 vorgesehen ist. Durch dieses Federelement 165 wird das Sperrelement 155 vom Akkumulator 100 weggedrückt, so dass der Haken des Sperrelements 155 vom Akkumulator 100 und somit vom Halteelement 105 weg zeigt, insbesondere in horizontaler Richtung. Der Haken des Sperrelements 155 und der insbesondere in vertikaler Richtung darüber liegende Anschlag 185 der Haltevorrichtung 120 weisen dabei einen Hub 290 auf, um den sich das Halteelement 105 bzw. der damit verbundene Akkumulator 100 nach oben 10 in vertikaler Richtung bewegen kann, bevor er im ungespannten Zustand des Sperrelements 155 an einer weiteren Bewegung gehindert wird. Dieser Hub 290 ist dabei ausreichend das Halteelement 105 und insbesondere den damit verbundenen Akkumulator 100 soweit nach oben 10 anzuheben, dass ein Zugriff auf das mittels dem Federelement 165 herausgedrückte Sperrelement 155 möglich ist. Durch ein zurückdrücken des Sperrelements 155 bzw. des Federelements 165 kann der Haken soweit in Richtung des Akkumulators 100 gedrückt werden, dass er an dem Anschlag 185 vorbei gelangt und so den Akkumulator zur Entnahme vollständig frei gibt.

In einer optionalen zusätzlichen Ausgestaltung kann vorgesehen sein, dass der Einsatz des Akkumulators 100 in der Aufnahme 210 des Rohrs 200 mittels eines elektrischen Kontakts 230 überprüft wird. Hierzu wird überprüft, inwieweit der Akkumulator 100 auf dem Boden des Rohrs 200 oder auf einem Träger, welcher der Haltevorrichtung 120 zugeordnet ist, aufsitzt. In dieser ersten Arretierungsposition ist der Akkumulator 100 arretiert und für den Betrieb verwendbar. Wird dagegen festgestellt, dass sich der Akkumulator 100 in der zweiten Arretierungsposition befindet, z.B. indem der Haken des Sperrelements am zweiten Anschlag anliegt, so kann in Abhängigkeit von dem elektrischen Kontakt eine Warnung an den Nutzer erfolgen. Die erste Arretierungsposition kann dabei mittels einer mechanischen Auflage des Akkumulators auf einen Sensor 230 erfasst werden. Vorteilhaft ist es dabei, den zugehörigen Sensor 230 im Bereich des größten Hubs zwischen der ersten und zweiten Arretierungsposition im unteren Bereich der Haltevorrichtung 120 anzuordnen.

In den Figuren 2a und 2b ist ein weiteres schematisches Ausführungsbeispiel der Erfindung dargestellt. In diesem Ausführungsbeispiel wird verdeutlicht, dass der Akkumulator 100 in einer Wanne als Aufnahme 210 innerhalb eines Rohrs 200 eines Fahrradrahmens untergebracht sein kann. Dabei schließt die Oberfläche des Akkumulators 100 oder ein auf der Oberfläche befestigte Abdeckung im Wesentlichen mit der Oberfläche des Rohrs 200 ab. Der Riegel 130 kann neben der bisher dargestellten Form auch als in der horizontalen Richtung verschiebbares Riegelelement ausgestaltet sein, welches durch eine Schloss 120 und einem damit verbundenen Schlüssel 125 hin und her bewegt werden kann. Das Sperrelement 150 im am Akkumulator 100 befestigtes Halteelement 105 weist wiederrum ein Sperrelement 150 auf, welches ohne eine separate Betätigung am zweiten Anschlag 180 anschlägt und somit eine Entnahme des Akkumulators 100 aus der Aufnahme 210 verhindert. Diese Freigabe des Akkumulators 100 ist erst bei Zurückdrücken des Sperrelements 150 oder eines Teils des Halteelements 105 möglich, welcher mit dem Sperrelement 150 in dieser Art und Weise verbunden ist.

Zur Kontaktierung des Akkumulators 100 kann gegenüber der Haltevorrichtung 110 eine Kontaktierungsvorrichtung 220 im Rohr 200 am Ende der Aufnahme 210 angeordnet sein. Es dient u.a. als Gegenelement für die Klemmkräfte durch den Riegel 130 bzw. dem Sperrelement 150 bzw. 155. Darüber hinaus kann das zweite Halteelement 220 weitere Merkmale aufweisen, die die Halterung des Akkumulators 100 in der Aufnahme 210 sowie deren elektrische Kontaktierung übernehmen, wie es beispielhaft die Figur 3 zeigt. Hierbei ist im zweiten Halteelement 220 ein entsprechender Kontakt 260 vorgesehen, welcher entsprechende Kontaktflächen 275 aufweist, z.B. in Form von Steckern/Buchsen, die mit entsprechenden Kontaktflächen 270, z.B. Buchsen/Stecker, des Akkumulators 100 verbunden sein können, um einen elektrischen Kontakt herzustellen. Zum Schutz der Kontaktflächen 270 des Akkumulators 100 sind diese üblicherweise in einer Vertiefung 280 untergebracht. Zusätzlich oder optional kann das zweite Halteelement 220 eine Ausformung 240 aufweisen, die in eine entsprechende Ausnehmung 250 des Akkumulators 100 hinein passt. Durch eine derartige Ausformung, z.B. einem Zapfen, kann eine geführte drehgelagerte Bewegung des Akkumulators 100 beim Einbringen in die Aufnahme 210 erreicht werden. Durch diese Führung kann vorteilhafterweise die Zusammenführung der Kontaktfläche und somit der elektrische Anschluss gezielt erreicht werden.

Wie bereits vorstehend erwähnt, können ein oder mehrere elektrische Kontakte 230 vorgesehen sein, die den Einsatz des Akkumulators in die Aufnahme 210 erfassen. Hierzu ist wenigstens ein elektrischer Kontakt 230 im Bereich des Halteelements 110 vorgesehen. Es kann jedoch ein weiterer elektrischer Kontakt 230 vorgesehen sein, der am anderen Ende der Aufnahme 210 im Bereich der Kontaktierungsvorrichtung 220 angeordnet ist. Der elektrische Kontakt 230 kann dabei unabhängig vom Halteelement, der Haltevorrichtung und/oder der Kontaktierungsvorrichtung auf dem Boden der Aufnahme angebracht sein. Alternativ ist auch möglich, dass die Haltevorrichtung 110 und die Kontaktierungsvorrichtung 220 mittels eines gemeinsam Trägers verbunden sind, auf den der Akkumulator 100 aufsitzt und in dem wenigstens ein elektrischer Kontakt 230 untergebracht ist.

### Bezugszeichenliste

- 10: oben, vertikale Richtung, bezogen auf Aufnahme
- 20: vertikale Richtung
- 30: horizontale Richtung
- 100: Akkumulator
- 105: Halteelement
- 110: Haltevorrichtung
- 115: Befestigung der Haltevorrichtung
- 120: Schloss
- 125: Schlüssel
- 130: Riegel in verriegeltem Zustand
- 140: Riegel in entriegeltem Zustand
- 150: Sperrelement
- 155: Sperrelement (Alternative)
- 160: Federelement (optional)
- 165: Federelement
- 170: Erster Anschlag am Akkumulator
- 180: Zweiter Anschlag am Halteelement
- 185: Zweiter Anschlag in einer alternativen Ausführung
- 190: Befestigungsmittel
- 195: Weiteres Befestigungsmittel (Gewinde)
- 200: Rohr des Fahrradrahmens
- 210: Aufnahme im Rohr
- 220: Kontaktierungsvorrichtung
- 230: Elektrischer Kontakt
- 240: Zapfen
- 250: Ausnehmung in Akkumulator
- 260: Anschlussstück
- 270: Kontaktfläche/Stecker/Buchse am Akkumulator
- 275: Kontaktfläche/Buchse/Stecker am zweiten Halteelement
- 280: Vertiefung im Akkumulator
- 290: Hub

## Patentansprüche

1. Haltelement (105) zur Befestigung an einem Akkumulator (100), mit
• einer ersten Seite, welche wenigstens ein Befestigungsmittel (190, 195) zur Befestigung an den Akkumulator (100) aufweist und
• einer der ersten Seite gegenüberliegenden zweiten Seite, welche
o einen ersten Anschlag (170) zum Angriff eines Riegels (130) einer ersten Haltevorrichtung (110) und
o ein Sperrelement (150, 155) aufweist,
**dadurch gekennzeichnet dass**,
das Sperrelement (150, 155)
• einen von der zweiten Seite wegführenden Haken zum Angriff an einen zweiten Anschlag (180, 185) der ersten Haltevorrichtung (110) und
• eine federnde Wirkung senkrecht zur zweiten Seite hin aufweist.

2. Halteelement (105) nach Anspruch 1, **dadurch gekennzeichnet, dass** das Sperrelement (150) im Randbereich der zweiten Seite angebracht ist und als Blattfeder in Richtung der Mitte der zweiten Seite ausgebildet ist.

3. Halteelement (105) nach Anspruch 1, **dadurch gekennzeichnet, dass** das Sperrelement (150, 155) ein erstes Federelement (160, 165) aufweist, welches im Randbereich der zweiten Seite angebracht ist.

4. Halteelement (105) nach einem der vorherigen Ansprüche, **dadurch gekennzeichnet, dass** das Befestigungsmittel (190, 195)
• ein insbesondere wenigstens teilweise umlaufendes Gewinde (195) und/oder
• eine mittig angeordnete Erhebung bzw. Vertiefung (190) aufweist.

5. Akkumulator mit einem Halteelement (105) nach einem der vorherigen Ansprüche, **dadurch gekennzeichnet, dass** das Haltelement (105) mit dem Akkumulator (100) mittels eines Befestigungsmittel (190, 195) verbunden ist, wobei das Halteelement (105) auf seiner von dem Akkumulator (100) wegführenden zweiten Seite
• einen ersten Anschlag (170) zum Angriff eines Riegels (130) einer ersten Haltevorrichtung (110) und
• ein Sperrelement (150, 155)
aufweist,
wobei das Sperrelement (150, 155)
• einen von der zweiten Seite wegführenden Haken zum Angriff an einen zweiten Anschlag (180, 185) der ersten Haltevorrichtung (110) und
• eine federnde Wirkung senkrecht zur zweiten Seite hin aufweist.

6. Haltevorrichtung (110) zur Halterung eines Halteelements (105) nach einem der Ansprüche 1 bis 4 bzw. zur Halterung eines Akkumulators (100) nach Anspruch 5 wenigstens in vertikaler Richtung (20), wobei die Haltevorrichtung (110)
• einen verschiebbaren Riegel (130, 140) mit einer horizontalen, zur zweiten Seite des Halteelements (105) gerichteten Bewegungskomponenten aufweist, wobei der Riegel (130, 140) bei einem in die Haltevorrichtung (110) eingesetzten Halteelement (105) geeignet ist,
o in einer verriegelten Position (130) einen Angriff an den ersten Anschlag (170) des Halteelements (105) derart durchzuführen, dass die Bewegung des Halteelements (105) und/oder des mit dem Halteelements (105) verbundenen Akkumulators (100) in vertikaler Richtung behindert wird, und
o in einer entriegelten Position (140) die Bewegung des Halteelements (105) und/oder des mit dem Halteelements (105) verbundenen Akkumulators (100) in vertikaler Richtung freigegeben wird,
**dadurch gekennzeichnet dass**
die Haltevorrichtung weiterhin
• einen zweiten Anschlag (180, 185) zum Angriff eines Sperrelements (150, 155) des Halteelements (105) aufweist, wobei die Bewegung des Halteelements (105) und/oder des mit dem Halteelements (105) verbundenen Akkumulators (100) in der entriegelten Position (140) des Riegels in vertikaler Richtung an dem zweiten Anschlag (180, 185) endet.

7. Haltevorrichtung (110) nach Anspruch 6, **dadurch gekennzeichnet, dass** der Riegel (140) in der entriegelten Position dazu eingerichtet ist, das Halteelement (105) und/oder den mit dem Halteelement (105) verbundenen Akkumulator (100) wenigstens lokal im Bereich des Halteelements (105) in vertikaler Richtung anzuheben.

8. Haltevorrichtung (110) nach Anspruch 6, **dadurch gekennzeichnet, dass** die Haltevorrichtung (110) ein zweites Federelement aufweist, welches bei der Verriegelung des Akkumulators in der Halterung durch den Riegel (130) gespannt wird, wobei das zweite Federelement in der entriegelten Position des Riegels (140) entspannt wird und das Halteelement (105) und/oder den mit dem Halteelement (105) verbundenen Akkumulator (100) wenigstens lokal im Bereich des Halteelements (105) in vertikaler Richtung anhebt, wobei insbesondere vorgesehen ist, dass das zweite Federelement im unteren Bereich der Haltevorrichtung (110) angeordnet ist.

9. Haltevorrichtung (110) nach Anspruch 7 oder 8, **dadurch gekennzeichnet, dass** der Hub der Anhebung derart groß ist, dass das Sperrelement (150, 155) wenigstens teilweise über den oberen Rand der Haltevorrichtung (110) heraus gehoben wird.

10. Haltevorrichtung (110) nach einem der Ansprüche 6 bis 9, **dadurch gekennzeichnet, dass** die Haltevorrichtung (110) einen elektrischen Kontakt (230) aufweist, welcher einen Einsatz des Halteelements (105) und/oder den mit dem Halteelement (105) verbundenen Akkumulators (100) in der verriegelten Position (130) erfasst, wobei insbesondere vorgesehen ist, dass der elektrische Kontakt (230) im unteren Bereich der Haltevorrichtung (110) angeordnet ist und das mechanische Aufliegen des Halteelements (105) und/oder des Akkumulators (100) erfasst.

11. Haltevorrichtung (110) nach einem der Ansprüche 6 bis 10, **dadurch gekennzeichnet, dass** der Riegel (130, 140) drehbar gelagert ist.

12. Haltevorrichtung (110) nach einem der Ansprüche 6 bis 11, **dadurch gekennzeichnet, dass** der Riegel (130) mechanisch mit einem Schloss (120) verbunden ist.

13. Halteeinrichtung bestehend aus Haltevorrichtung (110) nach einem der Ansprüche 7 bis 12 und einem Halteelement (105) zur Befestigung an einem Akkumulator (100) nach einem der Ansprüche 1 bis 5, wobei
• die Haltevorrichtung (110)
o einen verschiebbaren Riegel (130, 140) mit einer horizontalen, zur zweiten Seite des Halteelements (105) gerichteten Bewegungskomponenten aufweist, wobei der Riegel (130, 140) bei einem in die Haltevorrichtung (110) eingesetzten Halteelement (105) geeignet ist,
o in einer verriegelten Position (130) einen Angriff an den ersten Anschlag (170) des Halteelements (105) derart durchzuführen, dass die Bewegung des Halteelements (105) und/oder des mit dem Halteelements (105) verbundenen Akkumulators (100) in vertikaler Richtung behindert wird, und
o in einer entriegelten Position (140) die Bewegung des Halteelements (105) und/oder des mit dem Halteelements (105) verbundenen Akkumulators (100) in vertikaler Richtung freigegeben wird, und
o einen zweiten Anschlag (180, 185) zum Angriff eines Sperrelements (150, 155) des Halteelements (105) aufweist, wobei die Bewegung des Halteelements (105) und/oder des mit dem Halteelements (105) verbundenen Akkumulators (100) in der entriegelten Position (140) des Riegels in vertikaler Richtung an dem zweiten Anschlag (180, 185) endet, und
• das Haltelement (105)
∘ eine erste Seite aufweist, welche wenigstens ein Befestigungsmittel (190, 195) zur Befestigung an den Akkumulator (100) aufweist und
∘ eine der ersten Seite gegenüberliegende zweite Seite aufweist, welche
▪ einen ersten Anschlag (170) zum Angriff eines Riegels (130) einer ersten Haltevorrichtung (110) und
▪ ein Sperrelement (150, 155),
wobei das Sperrelement (150, 155)
• einen von der zweiten Seite wegführenden Haken zum Angriff an einen zweiten Anschlag (180, 185) der ersten Haltevorrichtung (110) und
• eine federnde Wirkung senkrecht zur zweiten Seite hin aufweist.

14. Halteeinrichtung nach Anspruch 13, **dadurch gekennzeichnet, dass** das Haltelement (110) und/oder der mit dem Halteelement (110) verbundene Akkumulator (100) durch ein Eindrücken des federnden Sperrelements der entriegelten Position (140) aus der Haltevorrichtung (110) entnommen werden kann.

15. Fahrradrahmen mit einer Haltevorrichtung (110) nach einem der Ansprüche 6 bis 11, wobei die Haltevorrichtung (110) im Inneren eines der Rohre des Fahrradrahmens befestigt ist, wobei insbesondere vorgesehen ist, dass die Haltevorrichtung (110) lösbar befestigt ist.

16. Fahrradrahmen nach Anspruch 15, **dadurch gekennzeichnet, dass** eines der Rohre des Fahrradrahmens mit einer Ausschneidung versehen ist, durch die ein Akkumulator (100) wenigstens teilweise in das Innere des Rohres eingelassen werden kann, wobei die Haltevorrichtung (110) im Inneren des Rohres an einem Ende der Ausschneidung angebracht ist.

17. Fahrradrahmen nach Anspruch 15 oder 16, **dadurch gekennzeichnet, dass** das Rohr des Fahrradrahmens ein Ober- oder Unterrohr repräsentiert, wobei insbesondere vorgesehen ist, dass die Ausschneidung nach unten zur Fahrbahn hin ausgerichtet ist.

## Claims

1. Retaining element (105) for securing to an accumulator (100), with
• a first side which comprises at least one fixing means (190, 195) for fixing to the accumulator (100), and
• a second side opposite the first side and comprising:
∘ a first stop (170) for engagement of a latch (130) of a first retaining device (110), and
∘ a blocking element (150, 155),
**characterized in that** the blocking element (150, 155) comprises:
• a hook leading away from the second side for engagement on a second stop (180, 185) of the first retaining device (110), and
• a springing effect perpendicularly towards the second side.

2. Retaining element (105) according to Claim 1, **characterized in that** the blocking element (150) is arranged in the edge region of the second side and is configured as a leaf spring in the direction of the middle of the second side.

3. Retaining element (105) according to Claim 1, **characterized in that** the blocking element (150, 155) has a first spring element (160, 165) which is arranged in the edge region of the second side.

4. Retaining element (105) according to any of the preceding claims, **characterized in that** the fixing means (190, 195) comprises:
• a thread (195) running in particular at least partially peripherally, and/or
• a protrusion or depression (190) arranged centrally.

5. Accumulator with a retaining element (105) according to any of the preceding claims, **characterized in that** the retaining element (105) is connected to the accumulator (100) by means of a fixing means (190, 195), wherein the retaining element (105), on its second side leading away from the accumulator (100), comprises:
• a first stop (170) for engagement of a latch (130) of a first retaining device (110), and
• a blocking element (150, 155),
wherein the blocking element (150, 155) comprises:
• a hook leading away from the second side for engagement on a second stop (180, 185) of the first retaining device (110), and
• a springing effect perpendicularly towards the second side.

6. Retaining device (110) for retaining a retaining element (105) according to any of Claims 1 to 4, or for retaining an accumulator (100) according to Claim 5, at least in a vertical direction (20), wherein the retaining device (110) comprises:
• a displaceable latch (130, 140) with a movement component oriented horizontally towards the second side of the retaining element (105), wherein when a retaining element (105) is inserted in the retaining device (110), the latch (130, 140) is able to:
o in a locked position (130), perform an engagement on the first stop (170) of the retaining element (105) such that the movement of the retaining element (105) and/or the accumulator (100) connected to the retaining element (105) in the vertical direction is prevented, and
∘ in an unlocked position (140), the movement of the retaining element (105) and/or the accumulator (100) connected to the retaining element (105) in the vertical direction is possible,
**characterized in that** the retaining device furthermore comprises:
• a second stop (180, 185) for engagement of a blocking element (150, 155) of the retaining element (105), wherein in the unlocked position (140) of the latch, the movement of the retaining element (105) and/or the accumulator (100) connected to the retaining element (105) in the vertical direction ends at the second stop (180, 185) .

7. Retaining device (110) according to Claim 6, **characterized in that** in the unlocked position, the latch (140) is configured to lift the retaining element (105) and/or the accumulator (100) connected to the retaining element (105) in the vertical direction, at least locally in the region of the retaining element (105).

8. Retaining device (110) according to Claim 6, **characterized in that** the retaining device (110) has a second spring element which is loaded by the latch (130) on locking of the accumulator in the holder, wherein the second spring element is unloaded in the unlocked position of the latch (140) and lifts the retaining element (105) and/or the accumulator (100) connected to the retaining element (105) in the vertical direction, at least locally in the region of the retaining element (105), wherein in particular it is provided that the second spring element is arranged in the lower region of the retaining device (110).

9. Retaining device (110) according to Claim 7 or 8, **characterized in that** the travel of the lift is sufficiently great for the blocking element (150, 155) to be lifted at least partially over the upper edge of the retaining device (110).

10. Retaining device (110) according to any of Claims 6 to 9, **characterized in that** the retaining device (110) has an electrical contact (230) which detects the insertion of the retaining element (105) and/or the accumulator (100) connected to the retaining element (105) in the locked position (130), wherein in particular it is provided that the electrical contact (230) is arranged in the lower region of the retaining device (110) and detects the mechanical contact of the retaining element (105) and/or the accumulator (100).

11. Retaining device (110) according to any of Claims 6 to 10, **characterized in that** the latch (130, 140) is mounted so as to be rotatable.

12. Retaining device (110) according to any of Claims 6 to 11, **characterized in that** the latch (130) is mechanically connected to a lock (120).

13. Retaining apparatus consisting of a retaining device (110) according to any of Claims 7 to 12 and a retaining element (105) for fixing to an accumulator (100) according to any of Claims 1 to 5, wherein:
• the retaining device (110) comprises:
∘ a displaceable latch (130, 140) with a movement component oriented horizontally towards the second side of the retaining element (105),
wherein when a retaining element (105) is inserted in the retaining device (110), the latch (130, 140) is able to:
∘ in a locked position (130), perform an engagement on the first stop (170) of the retaining element (105) such that the movement of the retaining element (105) and/or the accumulator (100) connected to the retaining element (105) in the vertical direction is prevented, and
∘ in an unlocked position (140), the movement of the retaining element (105) and/or the accumulator (100) connected to the retaining element (105) in the vertical direction is possible, and
∘ a second stop (180, 185) for engagement of a blocking element (150, 155) of the retaining element (105), wherein in the unlocked position (140) of the latch, the movement of the retaining element (105) and/or the accumulator (100) connected to the retaining element (105) in the vertical direction ends at the second stop (180, 185), and
• the retaining element (105) has
∘ a first side which comprises at least one fixing means (190, 195) for fixing to the accumulator (100), and
∘ a second side opposite the first side which:
▪ a first stop (170) for engagement of a latch (130) of a first retaining device (110), and
▪ a blocking element (150, 155),
wherein the blocking element (150, 155) comprises:
• a hook leading away from the second side for engagement on a second stop (180, 185) of the first retaining device (110), and
• a springing effect perpendicularly towards the second side.

14. Retaining apparatus according to Claim 13, **characterized in that** the retaining element (110) and/or the accumulator (100) connected to the retaining element (110) can be removed from the retaining device (110) by pressing the springing blocking element of the unlocked position (140).

15. Bicycle frame with a retaining device (110) according to any of Claims 6 to 11, wherein the retaining device (110) is secured in the interior of one of the tubes of the bicycle frame, wherein in particular it is provided that the retaining device (110) is releasably secured.

16. Bicycle frame according to Claim 15, **characterized in that** one of the tubes of the bicycle frame is provided with a cutout through which an accumulator (100) may be introduced at least partially into the interior of the tube, wherein the retaining device (110) is arranged at an end of the cutout inside the tube.

17. Bicycle frame according to Claim 15 or 16, **characterized in that** the tube of the bicycle frame constitutes an upper or lower tube, wherein in particular it is provided that the cutout is oriented facing downward towards the ground.

## Revendications

1. Élément de retenue (105) pour la fixation à un accumulateur (100), comprenant :
- un premier côté qui présente au moins un moyen de fixation (190, 195) pour la fixation à l'accumulateur (100) et
- un deuxième côté opposé au premier côté, qui présente
- une première butée (170) contre laquelle vient s'engager un verrou (130) d'un premier dispositif de retenue (110) et
- un élément de verrouillage (150, 155),
**caractérisé en ce que** l'élément de verrouillage (150, 155) présente
- un crochet s'étendant à l'écart du deuxième côté, destiné à s'engager contre une deuxième butée (180, 185) du premier dispositif de retenue (110) et
- un effet de ressort perpendiculaire en direction du deuxième côté.

2. Élément de retenue (105) selon la revendication 1, **caractérisé en ce que** l'élément de verrouillage (150) est monté dans la région de bord du deuxième côté et est réalisé sous la forme d'un ressort à lame dans la direction du centre du deuxième côté.

3. Élément de retenue (105) selon la revendication 1, **caractérisé en ce que** l'élément de verrouillage (150, 155) présente un premier élément de ressort (160, 165), lequel est monté dans la région de bord du deuxième côté.

4. Élément de retenue (105) selon l'une quelconque des revendications précédentes, **caractérisé en ce que** le moyen de fixation (190, 195) présente
- un filetage (195) s'étendant en particulier au moins en partie sur la périphérie et/ou
- un rehaussement ou un renfoncement (190) disposé centralement.

5. Accumulateur comprenant un élément de retenue (105) selon l'une quelconque des revendications précédentes, **caractérisé en ce que** l'élément de retenue (105) est connecté à l'accumulateur (100) au moyen d'un moyen de fixation (190, 195), l'élément de retenue (105) présentant, sur son deuxième côté s'étendant à l'écart de l'accumulateur (100),
- une première butée (170) contre laquelle vient s'engager un verrou (130) d'un premier dispositif de retenue (110) et
- un élément de verrouillage (150, 155), l'élément de verrouillage (150, 155) présentant
- un crochet s'étendant à l'écart du deuxième côté, destiné à s'engager contre une deuxième butée (180, 185) du premier dispositif de retenue (110) et
- un effet de ressort perpendiculaire en direction du deuxième côté.

6. Dispositif de retenue (110) pour retenir un élément de retenue (105) selon l'une quelconque des revendications 1 à 4 ou pour retenir un accumulateur (100) selon la revendication 5 au moins dans la direction verticale (20), le dispositif de retenue (110) présentant
- un verrou coulissant (130, 140) avec une composante de déplacement horizontale orientée vers le deuxième côté de l'élément de retenue (105), le verrou (130, 140), dans le cas où un élément de retenue (105) est inséré dans le dispositif de retenue (110), étant approprié
- dans une position verrouillée (130), pour s'engager contre la première butée (170) de l'élément de retenue (105) de manière à empêcher le déplacement dans la direction verticale de l'élément de retenue (105) et/ou de l'accumulateur (100) connecté à l'élément de retenue (105), et
- dans une position déverrouillée (140), pour permettre le déplacement dans la direction verticale de l'élément de retenue (105) et/ou de l'accumulateur (100) connecté à l'élément de retenue (105),
**caractérisé en ce que** le dispositif de retenue présente en outre
- une deuxième butée (180, 185) contre laquelle vient s'engager un élément de verrouillage (150, 155) de l'élément de retenue (105), le déplacement dans la direction verticale de l'élément de retenue (105) et/ou de l'accumulateur (100) connecté à l'élément de retenue (105) dans la position déverrouillée (140) du verrou se terminant au niveau de la deuxième butée (180, 185).

7. Dispositif de retenue (110) selon la revendication 6, **caractérisé en ce que** le verrou (140), dans la position déverrouillée, est approprié pour soulever dans la direction verticale l'élément de retenue (105) et/ou l'accumulateur (100) connecté à l'élément de retenue (105) au moins localement dans la région de l'élément de retenue (105).

8. Dispositif de retenue (110) selon la revendication 6, **caractérisé en ce que** le dispositif de retenue (110) présente un deuxième élément de ressort qui, lors du verrouillage de l'accumulateur dans la fixation est tendu par le verrou (130), le deuxième élément de ressort, dans la position déverrouillée du verrou (140), étant détendu et soulevant dans la direction verticale l'élément de retenue (105) et/ou l'accumulateur (100) connecté à l'élément de retenue (105) au moins localement dans la région de l'élément de retenue (105), le deuxième élément de ressort étant notamment disposé dans la région inférieure du dispositif de retenue (110).

9. Dispositif de retenue (110) selon la revendication 7 ou 8, **caractérisé en ce que** la course de soulèvement est suffisamment grande pour que l'élément de verrouillage (150, 155) soit soulevé au moins en partie au-delà du bord supérieur du dispositif de retenue (110).

10. Dispositif de retenue (110) selon l'une quelconque des revendications 6 à 9, **caractérisé en ce que** le dispositif de retenue (110) présente un contact électrique (230) qui détecte une insertion de l'élément de retenue (105) et/ou de l'accumulateur (100) connecté à l'élément de retenue (105) dans la position verrouillée (130), et il est notamment prévu que le contact électrique (230) soit disposé dans la région inférieure du dispositif de retenue (110) et qu'il détecte l'application mécanique de l'élément de retenue (105) et/ou de l'accumulateur (100) .

11. Dispositif de retenue (110) selon l'une quelconque des revendications 6 à 10, **caractérisé en ce que** le verrou (130, 140) est supporté de manière rotative.

12. Dispositif de retenue (110) selon l'une quelconque des revendications 6 à 11, **caractérisé en ce que** le verrou (130) est connecté mécaniquement à une serrure (120).

13. Système de retenue constitué du dispositif de retenue (110) selon l'une quelconque des revendications 7 à 12 et d'un élément de retenue (105) pour la fixation à un accumulateur (100) selon l'une quelconque des revendications 1 à 5,
- le dispositif de retenue (110) présentant
- un verrou coulissant (130, 140) avec une composante de déplacement horizontale orientée vers le deuxième côté de l'élément de retenue (105), le verrou (130, 140), dans le cas où un élément de retenue (105) est inséré dans le dispositif de retenue (110), étant approprié
- dans une position verrouillée (130), pour s'engager contre la première butée (170) de l'élément de retenue (105) de manière à empêcher le déplacement dans la direction verticale de l'élément de retenue (105) et/ou de l'accumulateur (100) connecté à l'élément de retenue (105), et
- dans une position déverrouillée (140), pour permettre le déplacement dans la direction verticale de l'élément de retenue (105) et/ou de l'accumulateur (100) connecté à l'élément de retenue (105), et
- présentant une deuxième butée (180, 185) contre laquelle vient s'engager un élément de verrouillage (150, 155) de l'élément de retenue (105), le déplacement dans la direction verticale de l'élément de retenue (105) et/ou de l'accumulateur (100) connecté à l'élément de retenue (105) dans la position déverrouillée (140) du verrou se terminant au niveau de la deuxième butée (180, 185), et
- l'élément de retenue (105) présentant
- un premier côté qui présente au moins un moyen de fixation (190, 195) pour la fixation à l'accumulateur (100) et
- un deuxième côté opposé au premier côté, qui
- une première butée (170) contre laquelle vient s'engager un verrou (130) d'un premier dispositif de retenue (110) et
- un élément de verrouillage (150, 155),
l'élément de verrouillage (150, 155) présentant
- un crochet s'étendant à l'écart du deuxième côté, destiné à s'engager contre une deuxième butée (180, 185) du premier dispositif de retenue (110) et
- un effet de ressort perpendiculaire en direction du deuxième côté.

14. Système de retenue selon la revendication 13, **caractérisé en ce que** l'élément de retenue (110) et/ou l'accumulateur (100) connecté à l'élément de retenue (110) peuvent être enlevés du dispositif de retenue (110) par enfoncement de l'élément de verrouillage élastique de la position déverrouillée (140).

15. Cadre de bicyclette comprenant un dispositif de retenue (110) selon l'une quelconque des revendications 6 à 11, dans lequel le dispositif de retenue (110) est fixé à l'intérieur de l'un des tubes du cadre de bicyclette, le dispositif de retenue (110) étant notamment fixé de manière détachable.

16. Cadre de bicyclette selon la revendication 15, **caractérisé en ce que** l'un des tubes du cadre de bicyclette est pourvu d'une découpe à travers laquelle un accumulateur (100) peut être introduit au moins en partie à l'intérieur du tube, le dispositif de retenue (110) étant monté à l'intérieur du tube à une extrémité de la découpe.

17. Cadre de bicyclette selon la revendication 15 ou 16, **caractérisé en ce que** le tube du cadre de bicyclette représente un tube supérieur ou un tube inférieur, en particulier la découpe étant orientée notamment vers le bas en direction de la route.
